(19) Europäisches Patentamt
European Patent Office
Office européen des brevets

(11) Publication number: 0 061 713 B1

(12) EUROPEAN PATENT SPECIFICATION

(45) Date of publication of patent specification: 07.11.84

(51) Int. Cl.³: C 07 C 69/74, C 07 C 69/743, A 01 N 53/00

(21) Application number: 82102457.7

(22) Date of filing: 24.03.82

# (54) Cyclopropanecarboxylic acid esters, their production and insecticidal and acaricidal compositions containing them.

(30) Priority: 26.03.81 JP 44965/81

(43) Date of publication of application: 06.10.82 Bulletin 82/40

(45) Publication of the grant of the patent: 07.11.84 Bulletin 84/45

(84) Designated Contracting States: CH DE FR GB IT LI NL

(56) References cited:
EP-A-0 006 600
EP-A-0 006 978

COLLECTION OF CZECHOSLOVAK CHEMICAL COMMUNICATIONS, vol. 25, 1960, pages 1199-1209, M. HUDLICKY: "Organic compounds of fluorine. I. Fluorinated acetylenic carbinols"

(73) Proprietor: SUMITOMO CHEMICAL COMPANY, LIMITED
15 Kitahama 5-chome Higashi-ku
Osaka-shi Osaka-fu (JP)

(72) Inventor: Matsuo, Noritada
29-2, Aza Yamamichi
Minamino Itami-shi (JP)
Inventor: Hirano, Masachika
21-10, Kofudai-5-chome
Toyonocho Toyono-gun Osaka (JP)

(74) Representative: Vossius Vossius Tauchner Heunemann Rauh
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 061 713 B1

Courier Press, Leamington Spa, England.

**Description**

The present invention relates to novel cyclopropanecarboxylic acid esters of the formula (I):

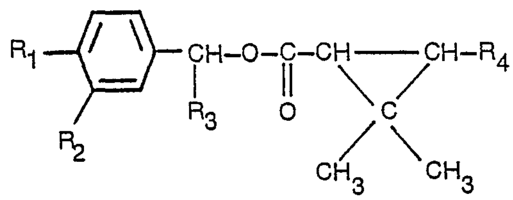

(I)

wherein $R_1$ is hydrogen atom or fluorine atom; when $R_1$ is hydrogen atom, $R_2$ is hydrogen atom or trifluoromethyl group; when $R_1$ is fluorine atom, $R_2$ is hydrogen atom or a halogen atom (e.g. fluorine, chlorine or bromine atom), $R_3$ is ethynyl or 1-propynyl group, $R_4$ is a group of the formula

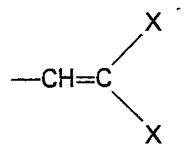

(in which X is a halogen atom (e.g. fluorine, chlorine or bromine atom)) or

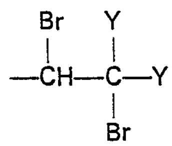

(in which Y is a halogen atom (e.g. fluorine, chlorine or bromine atom)), and their production and an insecticidal and acaricidal composition containing them as an active ingredient.

Various kinds of cyclopropanecarboxylic acid ester type insecticides are known, and some of such insecticides are found in the list of the pyrethrum compositions. Among many currently used insecticides, those of the pyrethrum compositions are widely used for controlling the sanitary harmful insects and the harmful insects in agriculture and horticulture because of their many advantageous properties such as low toxicity to man and beast, rapid effect on the harmful insects and unlikeliness of making the harmful insects resistant to them in addition to their inherent insecticidal activity. These pyrethrum insecticides, however, have drawbacks that they are expensive and subject to certain restrictions in the scope of their applications, and hence a plurality of analogous compounds have been synthesized by many scientists. But very few of them are superior to natural pyrethrin or allethrin from the overall aspect of wide application, efficacy and cost.

What is most important to insect controlling agents is to rapidly knock down and kill insects aimed at, thereby preventing damages by the insects.

As a result of a study of search for insecticides and acaricides having the foregoing desirable characteristics, the inventors found that the present compounds of the formula (I), particularly the compounds of the formula (I) wherein $R_1$ is fluorine atom and $R_2$ is bromine atom, have excellent knockdown and lethal effects against various species of insect and acarid pests and can be synthethized easily. Further, the inventors confirmed that these novel compounds are applicable to practical use, and thus attained to the present invention.

The present compounds can be obtained in a high yield by reacting a carboxylic acid represented by the formula (II),

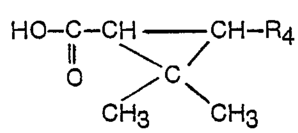

(II)

(wherein $R_4$ is as defined above) or a reactive derivative thereof with an alcohol represented by the formula (III),

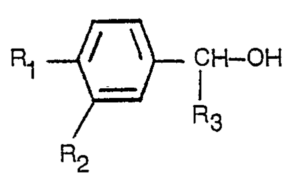

(III)

(wherein $R_1$, $R_2$ and $R_3$ are as defined above). As the said reactive derivatives of the carboxylic acids, mention may be made of carboxylic acid chloride or bromide and carboxylic anhydrides.

The methods for the production of the present compounds are outlined below with reference to examples.

(Producing method A) The method by the reaction of an alcohol with a carboxylic acid halide:
An alcohol represented by the formula,

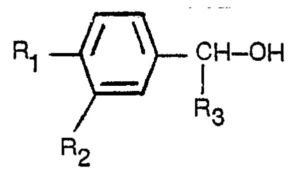

(wherein $R_1$, $R_2$ and $R_3$ are as defined above) is reacted with a carboxylic acid chloride or bromide represented by the formula,

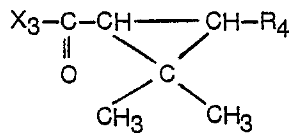

(wherein $R_4$ is as defined above and $X_3$ represents chlorine or bromine atom), preferably a carboxylic acid chloride, in an inert solvent (e.g. benzene, toluene, ether or hexane) in the presence of tertiary amine (e.g. pyridine or triethylamine) at a temperature of −30° to 100°C for 30 minutes to 10 hours.

(Producing method B) The method by the reaction of an alcohol with a carboxylic anhydride:
An alcohol represented by the formula,

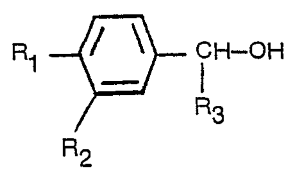 (III)

(wherein $R_1$, $R_2$ and $R_3$ are as defined above) is reacted with a carboxylic anhydride represented by the formula,

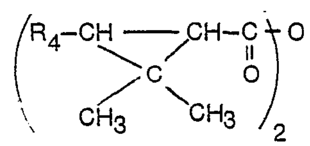

(wherein $R_4$ is as defined above) in an inert solvent (e.g. benzene, toluene, hexane or acetone) in the presence or absense of the tertiary amine (e.g. pyridine or triethylamine) at a temperature of −20° to 100°C for 1 to 10 hours.

(Producing method C) The method by the reaction of an alcohol with a carboxylic acid:
An alcohol represented by the formula,

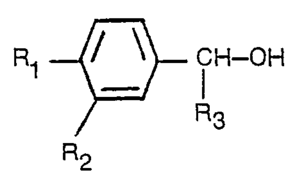

(wherein $R_1$, $R_2$ and $R_3$ are as defined above) is reacted with a carboxylic acid represented by the formula,

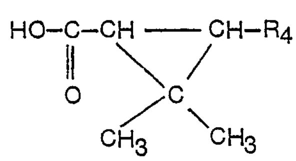

(wherein $R_4$ is as defined above) in the presence of a dehydrating agent (e.g. dicyclohexylcarbodiimide)

in an inert solvent (e.g. benzene, toluene or xylene) at a temperature of 0° to 150°C for 30 minutes to 10 hours.

The cyclopropanecarboxylic acid esters obtained by the above methods may be purified, if necessary, by chromatography or other means.

The alcohol represented by the formula (III) which is an intermediate material for the present compounds, can be produced according to a method described in J. Am. Chem. Soc., *69*, 2017—2018 (1947), and the alcohol of the formula (III) wherein $R_1$ is hydrogen atom, $R_2$ is trifluoromethyl group and $R_3$ is ethynyl group, is described in Chem. Abst., *52*, 1502—1503 (1961).

Example 1 (Production of compound No. 1 according to the producing method A)

Into a solution containing 1.37 g (6.0 mmole) of 3 - bromo - 4 - fluoro - $\alpha$ - ethynylbenzyl alcohol, 10 ml of benzene and 0.95 g (12 mmole) of pyridine, while being cooled at 5°C or below and stirred, was added dropwise a solution of 1.37 g (6.0 mmole) of (± - cis,trans - 2,2 - dimethyl - 3 - (2,2 - dichlorovinyl)cyclopropanecarbonyl chloride in 5 ml of benzene. After completion of the addition, the mixture was stirred overnight at room temperature. The reaction mixture was mixed with water and allowed to separate into two layers. The organic layer was washed successively with 5% hydrochloric acid, saturated aqueous sodium bicarbonate solution and saturated aqueous sodium chloride solution, then dried over anhydrous sodium sulfate, and the solvent was evaporated in vacuo. The residue was purified by the silica gel column chromatography to obtain 1.98 g of 3 - bromo - 4 - fluoro - $\alpha$ - ethynylbenzyl (±) - cis,trans - 2,2 - dimethyl - 3 - (2,2 - dichlorovinyl)cyclopropanecarboxylate in the form of pale yellow liquid. $n_D^{25.5}$ 1.5473.

Example 2 (Production of compound No. 18 according to the producing method B)

To a solution consisting of 0.79 g (6.0 mmole) of $\alpha$-ethynylbenzyl alcohol, 5 ml of toluene, was added dropwise a solution of 1.91 g (6.0 mmole) of chrysanthemic acid anhydride in 5 ml of toluene with stirring at an internal temperature of 5°C or below under ice-cooling. After completion of the addition, the mixture was stirred overnight at room temperature, for one hour at 50°C, and then for one hour at room temperature after addition of water to the reaction mixture, to separate into two layers. The organic layer was washed with 5% hydrochloric acid and saturated aqueous sodium chloride solution, dried over anhydrous sodium sulfate, and the solvent was evaporated in vacuo. The residue was purified by silica gel column chromatography to obtain 1.10 g of pale yellow liquid of $\alpha$-ethynylbenzyl (+) - cis, - trans - chrysanthemate. $n_D^{26.5}$ 1.5212.

Example 3 (Production of compound No. 15 according to the producing method A)

To a solution of 1.9 g of 3-trifluoromethyl-$\alpha$-ethynylbenzyl alcohol and 1.0 g of pyridine in 20 ml of dry toluene cooled with cold water at 20°C or below, was added dropwise a solution of 2.2 g of (±) - cis,trans - 2,2 - dimethyl - 3 - (2,2 - dichlorovinyl)cyclopropanecarboxylic acid chloride in 10 ml of dry toluene, to immediately form a precipitate of hydrochloric acid salt of pyridine. The reaction mixture was stirred for 3 hours and subjected to the after-treatment as in Example 1 above to obtain 3.0 g of 3 - trifluoromethyl - $\alpha$ - ethynylbenzyl (±) - cis,trans - 2,2 - dimethyl - 3 - (2,2 - dichlorovinyl)cyclopropanecarboxylate in the form of pale yellow oil. $n_D^{25.5}$ 1.5041.

Examples of the present compounds which can be similarly produced are shown in the *Table 1.*

TABLE 1

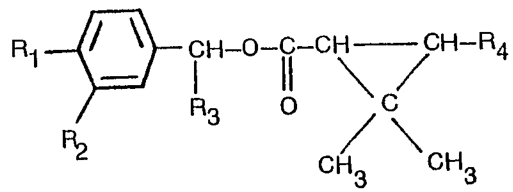 (I)

| Compound No. | Structural formula | | | | | Physical property | Note |
|---|---|---|---|---|---|---|---|
| | $R_1$ | $R_2$ | $R_3$ | $R_4$ | Composition of acid moiety | | |
| 1 | F | Br | $-C\equiv CH$ | 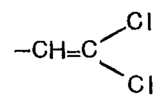 | (±)–cis, trans | $n_D^{25.5}$ 1.5473 | |
| 2 | F | ,, | ,, | 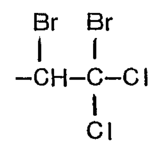 | ,, | $n_D^{25.0}$ 1.5608 | |
| 3 | F | Cl | ,, | 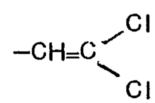 | (+)–cis | $n_D^{25.0}$ 1.5466 | |
| 4 | F | F | ,, | ,, | (±)–cis, trans | $n_D^{25.0}$ 1.5228 | |
| 5 | F | Br | $-C\equiv C-CH_3$ | 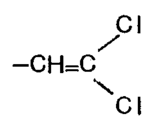 | (±)–cis, trans | $n_D^{25.5}$ 1.5481 | |

TABLE 1 (Continued)

| Compound No. | Structural formula | | | | | Physical property | Note |
|---|---|---|---|---|---|---|---|
| | $R_1$ | $R_2$ | $R_3$ | $R_4$ | Composition of acid moiety | | |
| 6 | F | Br | $-C\equiv CH$ | 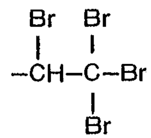 | (+)−cis | Resinous | |
| 7 | F | Cl | ,, | 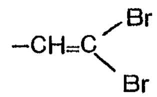 | ,, | $n_D^{24.0}$ 1.5623 | |
| 8 | F | H | ,, | 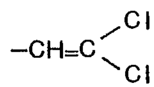 | (±)−cis, trans | $n_D^{22.0}$ 1.5.299 | |
| 9 | H | H | ,, | ,, | ,, | $n_D^{21.0}$ 1.5437 | |
| 10 | H | H | ,, | 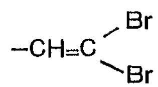 | (+)−cis | $n_D^{21.0}$ 1.5698 | Alcohol moiety: R form |
| 11 | H | H | $-C\equiv C-CH_3$ | 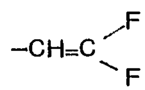 | (+)−trans | $n_D^{22.5}$ 1.4850 | |
| 12 | H | H | $-C\equiv CH$ | 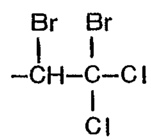 | (±)−cis, trans | $n_D^{21.0}$ 1.5527 | |

TABLE 1 (Continued)

| Compound No. | Structural formula | | | | | Physical property | Note |
|---|---|---|---|---|---|---|---|
| | $R_1$ | $R_2$ | $R_3$ | $R_4$ | Composition of acid moiety | | |
| 13 | H | H | $-C{\equiv}C-CH_3$ | 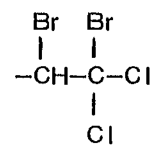 | (±)–cis, trans | $n_D^{26.0}$ 1.5532 | |
| 14 | H | $CF_3$ | $-C{\equiv}CH$ | ,, | ,, | $n_D^{25.0}$ 1.5133 | |
| 15 | H | ,, | ,, | 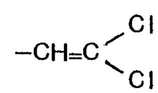 | ,, | $n_D^{25.5}$ 1.5041 | |
| 16 | H | H | ,, | 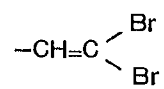 | (+)–cis | m.p. 62.4°C | Alcohol moiety: S form |
| 17 | H | H | $-C{\equiv}C-CH_3$ | 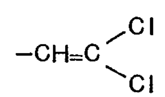 | (±)–cis, trans | $n_D^{27.0}$ 1.5449 | |

In formulating an insecticidal and acaricidal composition containing the present compounds (I) as an active ingredient, the compounds may be formulated, like the conventional pyrethroids, into optional formulation forms using carriers or diluents for the common insecticidal and acaricidal composition according to the methods well known to those skilled in the art. The formulation forms include for example emulsifiable concentrates, wettable powders, dusts, granules, fine granules, oil sprays, aerosols, heating fumigants (mosquito coils, electric mosquito fumigators), foggings, non-heating fumigants, baits of powder form or solid form containing attractants and other optional forms and the present compounds can be applied to various uses in required formulation forms and using required carriers. Also, the insecticidal and acaricidal activity of the present compounds can be increased by blending with synergists for pyrethroids or other well-known effective synergists for allethrin and pyrethrins. The synergists for pyrethroids include for example $\alpha$ - [2 - (2 - butoxyethoxy)ethoxy] - 4,5 - methylenedioxy - 2 - propyltoluene, octachlorodipropyl ether and the other known synergists.

In general, cyclopropanecarboxylic acid esters tend to be inferior in resistance to light, heat and oxidation, and therefore compositions of more stable effect can be obtained by adding a proper amount of stabilizers. The stabilizers include for example antioxidants and ultraviolet absorbers such as phenol derivatives (e.g. BHT, BHA), bisphenol derivatives, arylamines (e.g. phenyl-$\alpha$-naphthylamine, phenyl-$\beta$-naphthylamine, condensation products of phenetidine and acetone), and benzophenone compounds.

Further, multi-purpose compositions of excellent efficacy can be produced by mixing with other active ingredients for example allethrin, N - (chrysanthemoxymethyl) - 3,4,5,6 - tetrahydrophthalimide (hereinafter referred to as tetramethrin), 5 - benzyl - 3 - furylmethyl chrysanthemate, 3-phenoxybenzyl chrysanthemate, d-trans or d-cis,trans isomers of these chrysanthemates, phrethrum extracts, d-trans or d-cis, trans chrysanthemic esters of d-allethrolone, and other well-known pyrethroids, organophosphorus insecticides such as O,O-dimethyl O-(3-methyl-4-nitrophenyl)phosphorothioate, O,O-dimethyl O-4-cyanophenylphosphorothioate, O,O-dimethyl O-(2,2-dichlorovinyl)-phosphate; carbamate insecticides such as 1-naphthyl N-methylcarbamate, m-tolyl N-methylcarbamate, 3,4-dimethylphenyl N-methylcarbamate; other insecticides, other acaricides, fungicides, nematocides, plant growth regulators, fertilizers, microbial pesticides such as B.T. and B.M., insect hormone compounds and other agricultural chemicals. Further, a synergistic effect can be expected by such mixing.

The foregoing compositions generally contain 0.05 to 95.0% by weight, preferably 0.1 to 80.0% by weight, of the active ingredient (including other ingredients mixed). Since, however, the amount and concentration of the active ingredient depend upon the formulation forms, application time, application techniques, application sites, pest and crops, they may properly be increased or decreased irrespective of the aforesaid ranges.

Next, the composition and effect of the insecticides and acaricides of the present invention will be illustrated with reference to the following formulation examples and test examples.

### Formulation Example 1

Each 20 parts of the compound Nos. 1 to 18, 10 parts of an emulsifier (Sorpol 3005X, Trademark for Toho Chemical Co.) and 70 parts of xylene are thoroughly mixed with stirring to obtain the emulsifiable concentrate of each compound.

### Formulation Example 2

Each 1 part of the compound Nos. 1 to 8 and 15, and 0.3 part of PAP (isopropyl acid phosphate) are dissolved in 20 parts of acetone. To the solution was added 98.7 parts of 300-mesh clay. The mixture is thoroughly stirred and stripped of acetone by evaporation to obtain the dust of each compound.

### Formulation Example 3

To 0.3 part of the compound No. 1, are added successively 2 parts of m-tolyl N-methylcarbamate, 0.3 part of PAP (described before) and 20 parts of acetone. To the resulting solution is added 97.4 parts of 300-mesh clay. The mixture is thoroughly stirred and stripped of acetone by evaporation to obtain a dust formulation.

### Formulation Example 4

To an intimate mixture of each 10 parts of the compounds Nos. 1 to 8 and 5 parts of an emulsifier (Sorpol SM—200, Trademark for Toho Chemical Co.), is added 85 parts of 300-mesh diatomaceous earth. The mixture is thoroughly blended to obtain a wettable powder of each compound.

### Formulation Example 5

0.5 Part of each of the compounds Nos. 1 to 8 is dissolved in kerosene and make up to 100 parts with kerosene to obtain the oil spray of each compound.

Formulation Example 6

0.1 Part of each of the compounds Nos. 9 to 17 is dissolved in kerosene and make up to 100 parts with kerosene to obtain the oil spray of each compound.

Formulation Example 7

0.4 Part of the compound No. 4, 0.2 part of tetramethrin, 7 parts of xylene and 7.4 parts of deodorized kerosene are well mixed to make a solution. The solution is filled in an aerosol container. After attaching a valve portion to the container, 85 parts of a propellant (liquefied petroleum gas) is charged therein under pressure through the valve to obtain the aerosol.

Formulation Example 8

0.4 Part of the compound No. 8, 0.2 part of allethrin, 13.4 parts of deodorized kerosene and 1 part of an emulsifier (Atmos 300, Trademark for Atlas Chemical Co.) are mixed and emulsified with addition of 50 parts of distilled water. The emulsion is then filled in an aerosol container together with 35 parts of a 3:1 mixture of deodorized butane and deodorized propane to obtain the water-based aerosol of each compound.

Test Example 1

Insecticidal activity against housefly

The 20% emulsifiable concentrate of each of the compounds Nos. 1 to 18 obtained by the method described in Formulation example 1 was diluted 400 times with water (corresponding to 500 ppm of active ingredient).

On the bottom of a polyethylene cup of 5.5 cm in diameter was place a piece of filter paper of the same size as the bottom, and 0.7 ml of the above dilute liquor was dropped down to the filter paper. Sucrose (30 mg) was placed on the paper as bait. Thereafter, 10 housefly female adults (*Musca domestica*) were liberated in the cup which was then covered with a lid. After 48 hours, the dead and live were counted to obtain mortality (2 replications). The results are as shown in the following *Table 2*.

TABLE 2

| Test compounds | % Mortality | Test compounds | % Mortality |
|---|---|---|---|
| 1 | 100 | 11 | 100 |
| 2 | 100 | 12 | 100 |
| 3 | 100 | 13 | 100 |
| 4 | 100 | 14 | 100 |
| 5 | 100 | 15 | 100 |
| 6 | 100 | 16 | 100 |
| 7 | 100 | 17 | 100 |
| 8 | 100 | 18 | 100 |
| 9 | 100 | untreated | 0 |
| 10 | 100 | | |

Test Example 2

Insecticidal activity against brown planthopper

400-Fold aqueous dilutions (corresponding to 500 ppm of active ingredient) were prepared from the 20% emulsifiable concentrates obtained by the method in Formulation example 1 and from those of reference compounds obtained according to the comparable formulation. Using a turntable, each dilution was sprayed to rice plants, grown in 180 ml plastic pot and about one month old from the sowing, at a rate of 15 ml/2 pots. After air-drying, each pot was covered with a wire cage and about 15 adult brown planthoppers were released in the cage. After 24 hours the numbers of dead and alive were counted. For the purpose of examining the residual activity, the insects were released in the cage after 3 days and 7 days from the spraying and the numbers of dead and alive were counted after 24 hours from the release of insects. The results were as shown in the *Table 3* and *Table 4*.

TABLE 3

| Compound No. | Mortality (%) | | |
|---|---|---|---|
| | On the day of spraying | After 3 days | After 7 days |
| 1 | 100 | 100 | 100 |
| 2 | 100 | 100 | 90 |
| 3 | 100 | 100 | 97 |
| 7 | 97 | 100 | 83 |
| *1) 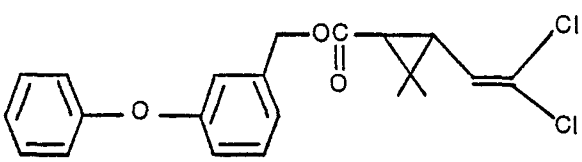 | 63 | 50 | – |
| *2) 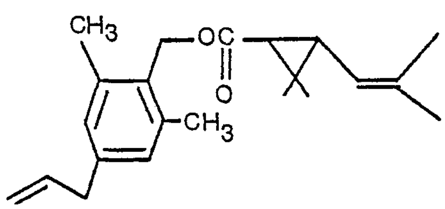 | 43 | – | – |
| MPMC *3) | 76 | 17 | – |
| Untreated | 4 | 0 | 3 |

Note:

*1) Compound described in Nature, *246*, 169–170 (1973).

*2) Compound described in Nature, *207*, 938–940 (1965).

*3) m-Tolyl N-methylcarbamate.

TABLE 4

| Compound No. | Mortality (%) | | |
|---|---|---|---|
| | On the day of spraying | After 3 days | After 7 days |
| 9 | 100 | 100 | 80 |
| 15 | 100 | 100 | 100 |
| 17 | 100 | 100 | 87 |
| MPMC *3) | 87 | 23 | – |
| Untreated | 0 | 0 | 3 |

Note: *3) m-Tolyl N-methylcarbamate

Test Example 3

Insecticidal activity against smaller brown planthopper

The 20% emulsifiable concentrate of the compound of this invention obtained in Formulation example 1 was diluted 400-fold with water (corresponding to 500 ppm of active ingredient). Rice seedlings were dipped into the dilution for one minute. After air-drying, the seedlings were placed in a test tube. Adult smaller brown planthoppers were released into the test tube and the numbers of dead and alive were counted after 24 hours, to obtain the results as shown in the following *Table 5*.

TABLE 5

| Compound No. | Mortality (%) |
|---|---|
| 1 | 100 |
| 2 | 100 |
| 3 | 100 |
| 4 | 100 |
| 5 | 100 |
| 6 | 100 |
| 7 | 100 |
| 8 | 100 |
| 9 | 100 |
| 10 | 100 |
| 11 | 100 |
| 12 | 100 |
| 13 | 100 |
| 14 | 100 |
| 15 | 100 |
| 16 | 100 |
| 17 | 100 |
| 18 | 100 |
| Untreated | 0 |

Test Example 4

Control effect on carmine mite

Adult female carmine mite was allowed to become parasitic on 4 leaves of a potted kidney bean plant of 5-day old from the sowing, at a rate of 10 adult mites per leaf. The pot was kept in a constant temperature room at 27°C. After 6 days, an emulsion prepared by diluting the emulsifiable concentrate obtained by the method in the Formulation example 1 with water to an active ingredient content of 500 ppm was sprayed to the pot on a turntable at a rate of 10 ml per pot. After 10 days, the number of adult female mites on the plant was counted. The criteria for the evaluation of effectiveness were as follows:

++: 0—9 Adult female mites per leaf were parasitic.

+: 10—30 Adult female mites per leaf were parasitic.

—: More than 31 adult female mites per leaf were parasitic.

The results were as shown in the following *Table 6.*

TABLE 6

| Compound No. | Result of evaluation |
|---|---|
| 1 | ++ |
| 3 | ++ |
| Untreated | – |

## Claims

1. Cyclopropanecarboxylic acid esters of the formula

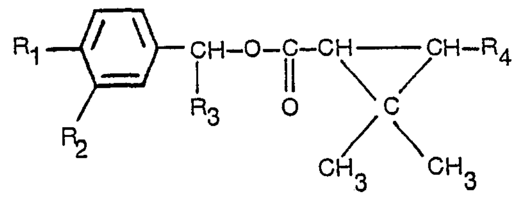

wherein $R_1$ is hydrogen atom or fluorine atom; when $R_1$ is hydrogen atom, $R_2$ is hydrogen atom or trifluoromethyl group; when $R_1$ is fluorine atom, $R_2$ is hydrogen atom or a halogen atom; $R_3$ is ethynyl or 1-propynyl group; $R_4$ is a group of the formula,

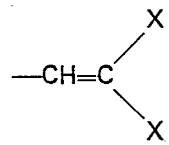

(in which X is a halogen atom) or the formula

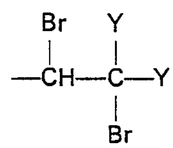

(in which Y is a halogen atom).

2. A compound according to Claim 1, wherein $R_1$ is fluorine and $R_2$ is bromine.

3. A compound of the formula,

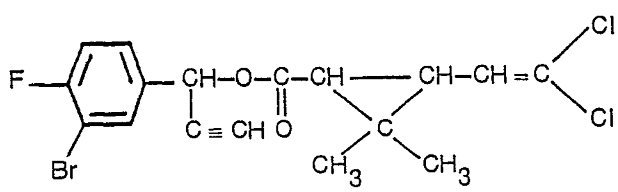

4. A compound of the formula

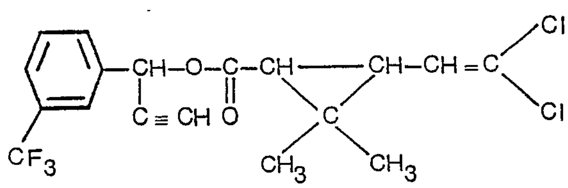

5. A method for producing the compound according to Claim 1, which comprises reacting a carboxylic acid of the formula

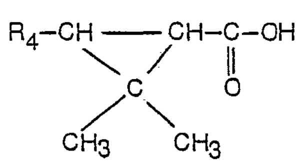

wherein $R_4$ is a group of the formula

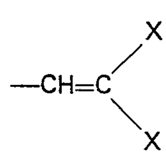

(in which X is a halogen atom) or the formula,

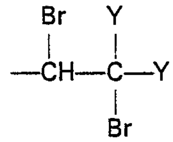

(in which Y is a halogen atom), or its reactive derivatives with an alcohol of the formula

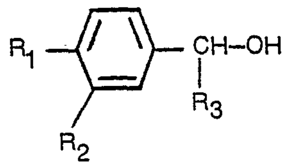

wherein $R_1$ is hydrogen atom or fluorine atom; when $R_1$ is hydrogen atom, $R_2$ is hydrogen atom or trifluoromethyl group; when $R_1$ is fluorine atom, $R_2$ is hydrogen atom or a halogen atom; and $R_3$ is ethynyl or 1-propynyl group.

6. An insecticidal and acaricidal composition which comprises as an active ingredient an insecticidally and acaricidally effective amount of the compound according to Claim 1 and an inert carrier.

7. A method for controlling an insect and an acarid which comprises applying an insecticidally and acaricidally effective amount of the compound according to Claim 1 to the insect and the acarid.

**Patentansprüche**

1. Cyclopropancarbonsäureester der Formel

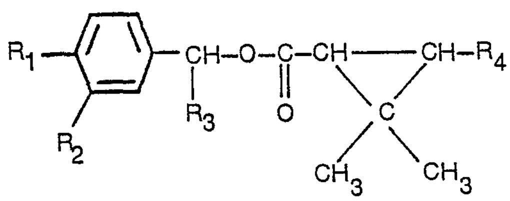

in der $R_1$ ein Wasserstoff- oder Fluoratom bedeutet; wenn $R_1$ ein Wasserstoffatom ist, $R_2$ ein Wasserstoffatom oder eine Trifluormethylgruppe bedeutet; wenn $R_1$ ein Fluoratom ist, $R_2$ ein Wasserstoffatom oder ein Halogenatom bedeutet; $R_3$ eine Äthinyl- oder 1-Propinylgruppe bedeutet und $R_4$ einen Rest der Formel

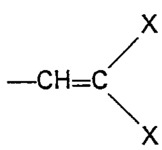

(in der X ein Halogenatom ist) oder einen Rest der Formel

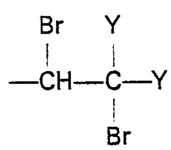

(in der Y ein Halogenatom ist) darstellt.

2. Eine Verbindung nach Anspruch 1, in der $R_1$ ein Fluoratom und $R_2$ ein Bromatom darstellt.

3. Eine Verbindung der Formel

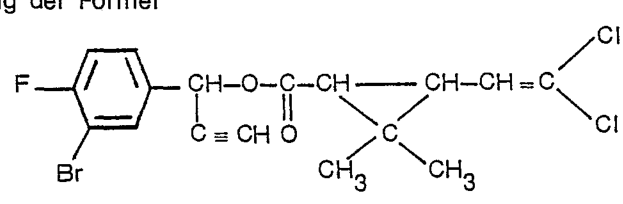

4. Eine Verbindung der Formel

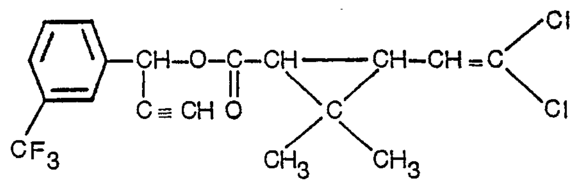

5. Ein Verfahren zur Herstellung einer Verbindung nach Anspruch 1, gekennzeichnet durch Umsetzung einer Carbonsäure der Formel

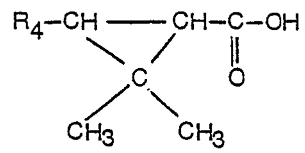

in der $R_4$ einen Rest der Formel

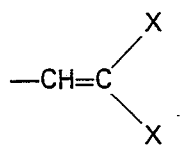

(in der X ein Halogenatom ist) oder einen Rest der Formel

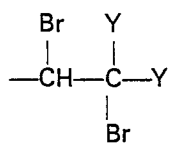

(in der Y ein Halogenatom ist), oder ihres reaktionsfähigen Derivats mit einem Alkohol der Formel

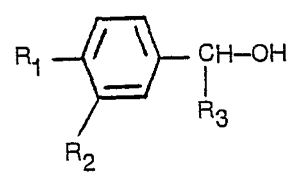

(III)

in der $R_1$ ein Wasserstoff- oder Fluoratom bedeutet; wenn $R_1$ ein Wasserstoffatom ist, $R_2$ ein Wasserstoffatom oder eine Trifluormethylgruppe bedeutet; wenn $R_1$ ein Fluoratom ist, $R_2$ ein Wasserstoffatom oder ein Halogenatom bedeutet; und $R_3$ eine Äthinyl- oder 1-Propinylgruppe bedeutet.

6. Eine insektizide oder akarizide Zusammensetzung, enthaltend als aktiven Wirkstoff eine insektizid-oder akarizidwirksame Menge der Verbindung nach Anspruch 1 und einen inerten Trägerstoff.

7. Ein Verfahren zur Bekämpfung von Insekten und Milben, gekennzeichnet durch Anwendung einer insektizid- oder akarizidwirksamen Menge der Verbindung nach Anspruch 1 bei Insekten und Milben.

**Revendications**

1. Esters d'acides cyclopropane-carboxyliques de formule

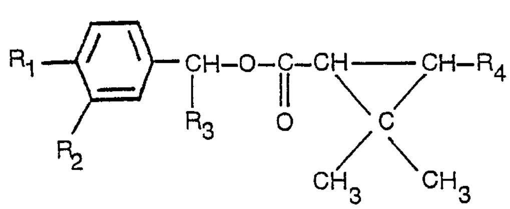

dans laquelle $R_1$ est un atome d'hydrogène ou un atome de fluor; lorsque $R_1$ est un atome d'hydrogène,

$R_2$ est un atome d'hydrogène ou un groupe trifluorométhyle et lorsque $R_1$ est un atome de fluor, $R_2$ est un atome d'hydrogène ou un atome d'halogène; $R_3$ est un groupe éthynyle ou 1-propynyle, $R_4$ est un groupe de formule

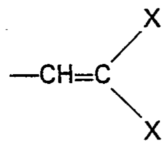

(dans laquelle X est un atome d'halogène) ou de formule

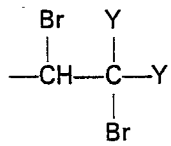

(dans laquelle Y est un atome d'halogène).

2. Composé selon la revendication 1, caractérisé en ce que $R_1$ est un atome de fluor et $R_2$ un atome de brome.

3. Composé de formule

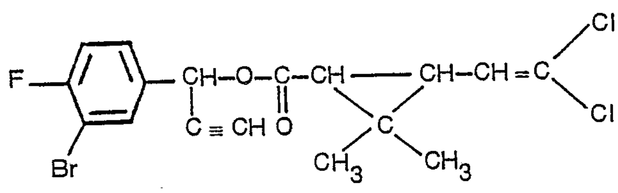

4. Composé de formule

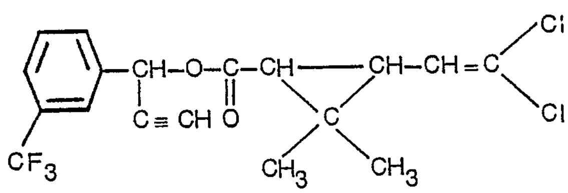

5. Procédé pour la préparation du composé selon la revendication 1, caractérisé en ce qu'il consiste à faire réagir un acide carboxylique de formule

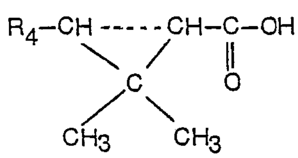

dans laquelle $R_4$ est un groupe de formule

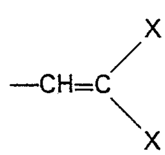

(X étant un atome d'halogène) ou de formule

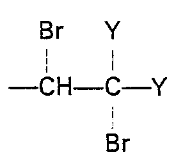

(Y étant un atome d'halogène) ou l'un de ses dérivés actifs avec un alcool de formule

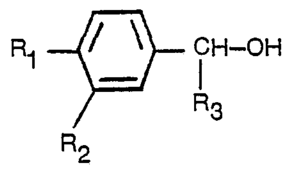

dans laquelle $R_1$ est un atome d'hydrogène ou de fluor; lorsque $R_1$ est un atome d'hydrogène, $R_2$ est un atome d'hydrogène ou un groupe trifluorométhyle et lorsque $R_1$ est un atome de fluor, $R_2$ est un atome d'hydrogène ou un atome d'halogène; et $R_3$ est un groupe éthynyle ou 1-propynyle.

6. Composition insecticide et acaricide, caractérisée en ce qu'elle comprend, en tant que constituant actif, une quantité efficace, pour la destruction des insectes et des acariens, du composé selon la revendication 1, avec un excipient inerte.

7. Procédé pour la lutte contre les insectes et les acariens, caractérisé en ce qu'il consiste à appliquer une quantité efficace, pour la destruction des insectes et des acariens, du composé selon la revendication 1, aux insectes et acariens.